(19) Europäisches Patentamt
European Patent Office
Office européen des brevets

(11) Veröffentlichungsnummer: **0 039 884**
**A1**

(12) # EUROPÄISCHE PATENTANMELDUNG

(21) Anmeldenummer: 81103394.3

(51) Int. Cl.³: C 03 B 37/16

(22) Anmeldetag: 05.05.81

(30) Priorität: 09.05.80 DE 3017873

(43) Veröffentlichungstag der Anmeldung: 18.11.81 Patentblatt 81/46

(84) Benannte Vertragsstaaten: CH FR GB IT LI SE

(71) Anmelder: SIEMENS AKTIENGESELLSCHAFT Berlin und München
Postfach 22 02 61
D-8000 München 22(DE)

(72) Erfinder: Mürkl, Helmut
Gabriele-Münter-Strasse 15
D-8000 München 71(DE)

(54) **Verfahren und Vorrichtung zum Trennen von mehreren in einem Kabel vereinigten Lichtwellenleitern.**

(57) Die Erfindung betrifft ein Verfahren und eine Vorrichtung zum Trennen von mehreren in einem Kabel vereinigten Lichtwellenleitern, wobei die Lichtwellenleiter (1) parallel über einen Amboß (4) geführt werden, dann durch senkrechten Druck auf die einzelnen Lichtwellenleiter (1) eine genau definierte Axialzugspannung eingestellt wird und anschließend die einzelnen Lichtwellenleiter nacheinander in senkrechter Richtung geritzt werden. Zur Anstellung einer genau definierten Axialzugspannung wird vorgeschlagen, daß die bewegliche Klemmvorrichtung (5) unter einer genau definierten Federkraft (7) steht, die durch nacheinander erfolgendes Anheben der Lichtwellenleiter (1) auf den jeweilig zu ritzenden Lichtwellenleiter übertragen wird.

EP 0 039 884 A1

./...

Croydon Printing Company Ltd.

COMPLETE DOCUMENT

FIG1

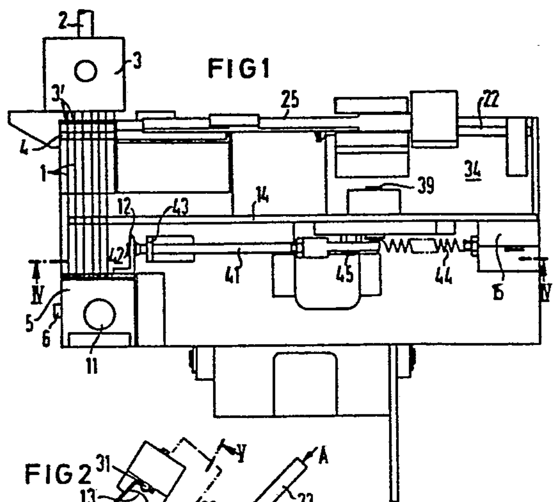
2
3
3'
4
1
25
22
34
39
14
12
43
42
41
45
44
15
IV
IV
5
6
11

FIG2

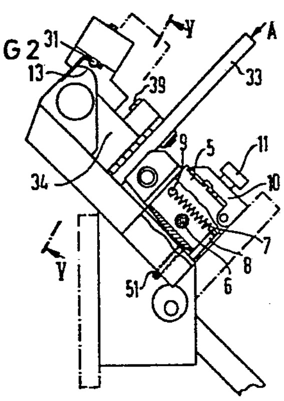
31
13
V
A
33
39
34
9
5
11
10
7
8
6
51
V

SIEMENS AKTIENGESELLSCHAFT
Berlin und München

Unser Zeichen
VPA 80 P 7062 E

# Verfahren und Vorrichtung zum Trennen von mehreren in einem Kabel vereinigten Lichtwellenleitern

Die Erfindung bezieht sich auf ein Verfahren zum Trennen von mehreren in einem Kabel vereinigten Lichtwellenleitern, wobei die Lichtwellenleiter zumindest an der zu trennenden Stelle parallel über einen Amboß geführt werden, dann durch senkrechten Druck auf die einzelnen Lichtwellenleiter eine genau definierte Axialzugspannung in den Lichtwellenleitern eingestellt wird und anschließend die einzelnen Lichtwellenleiter auf dem Amboß in senkrechter Richtung geritzt werden, sowie eine Vorrichtung zur Durchführung des Verfahrens.

Ein Verfahren und eine Vorrichtung dieser Art bilden Gegenstand der älteren Anmeldung P 29 25 070. Hierbei erfolgt der Druck auf die einzelnen Lichtwellenleiter zur Einhaltung einer genau definierten Axialzugspannung senkrecht von oben derart, daß die Lichtwellenleiter gegen die Oberfläche des Ambosses gedrückt werden. Der Druck wird hierbei mit Hilfe von durch Gewichte belastbaren Druckbolzen ausgeübt, wobei das Gewicht proportional der Axialzugspannung sein soll. Da jedoch der Durchhang infolge der Druckbelastung bei den einzelnen Lichtwellenleitern unterschiedlich sein kann, ist für die einzelnen Lichtwellenleiter keine genau definierte Axialzugspannung gewährleistet, sondern entsprechend den unterschiedlichen Durchhängen ergeben sich dann auch unterschiedliche Axialzugspannungen, die den Trennvorgang unter Umständen erheblich beeinflussen können. Mit zunehmendem Durchhang vergrößert sich auch der Auflagewinkel der einzelnen Lichtwellenleiter auf dem Amboß, was ebenfalls zu Schwankungen

Hs 1 Kow / 6.5.1980

der Axialzugspannung in den Lichtwellenleitern führen kann. Die Anordnung der Spannvorrichtung über dem Amboß behindert überdies das Einlegen der Lichtwellenleiter in die Klemmvorrichtungen.

Der Erfindung liegt die Aufgabe zugrunde, ein Verfahren zu schaffen, mit dem eine genauere Einstellung der Axialzugspannung in den Lichtwellenleitern ermöglicht wird. Darüberhinaus soll die Vorrichtung im Aufbau und in der Handhabung einfacher gestaltet sein.

Das erfindungsgemäße Verfahren besteht darin, daß zur Vorspannung der Lichtwellenleiter eine definierte in Achsrichtung der Lichtwellenleiter wirkende Kraft vorgesehen ist, die durch nacheinander erfolgendes Anheben des jeweilig zu ritzenden Lichtwellenleiters auf diesen übertragbar ist. Dadurch, daß zur Druckbelastung der einzelnen Lichtwellenleiter stets nur eine in einer Richtung wirkende Kraft benötigt wird, ergibt sich ein sehr einfacher Aufbau der Vorrichtung zur Durchführung des Verfahrens. Hierbei ist es zweckmäßig, daß die Lichtwellenleiter an der Trennstelle mit Hilfe einer feststehenden und einer beweglichen Klemmvorrichtung parallel über einen Amboß vorspannbar sind, wobei gemäß der Erfindung die bewegliche Klemmvorrichtung unter der Wirkung einer in Achsrichtung der Lichtwellenleiter wirkenden definierten Kraft steht und daß das nacheinander erfolgende Anheben der Lichtwellenleiter mit Hilfe eines am Ende entsprechend gestuften Spannhebels erfolgt. Diese Vorrichtung hat den wesentlichen Vorteil, daß nicht nur eine genau definierte Axialzugpsannung für die einzelnen Lichtwellenleiter zur Verfügung gestellt wird, sondern sie erleichtert auch die Handhabung der Vorrichtung ganz wesentlich, weil die Klemmvorrichtungen zum Einspannen der Lichtwellenleiter frei zugängig sind, da der Druck senkrecht von unten auf die einzelnen Lichtwellenleiter erfolgt. Die auf die bewegliche Klemmvorrichtung wirkende Kraft kann beispielsweise ein Gewicht sein. Besonders vorteilhaft ist jedoch eine Feder mit konstanter Spannung.

Vorzugsweise wird die bewegliche Klemmvorrichtung zum Einlegen bzw. Einspannen der Lichtwellenleiter in eine definierte Ausgangsstellung gebracht, in der sie von der Axialzugkraft entlastet sind. In dieser Ausgangsstellung ist sie zweckmäßigerweise arretierbar, wobei zur Arretierung der beweglichen Klemmvorrichtung eine mit einem konisch ausgebildeten Kopf versehene Stange vorgesehen ist, die mit einem Handhebel zur Betätigung einer in senkrechter Richtung zu den Lichtwellenleitern beweglichen Ritzvorrichtung sowie mit dem Hebel zum Anheben der Lichtwellenleiter kraftschlüssig verbunden ist.

Anhand der Zeichnung, in der ein Ausführungsbeispiel einer Vorrichtung zur Durchführung des Verfahrens dargestellt ist, wird die Erfindung näher erläutert. Es zeigen:

Figur 1 eine Ansicht der Vorrichtung in Blickrichtung A gemäß Figur 2,

Figur 2 eine Seitenansicht von links der Vorrichtung nach Figur 1,

Figur 3 eine Vorderansicht der Vorrichtung nach Figur 2,

Figur 4 einen Schnitt nach der Linie IV-IV der Figur 1 und

Figur 5 einen Schnitt nach der Linie V-V der Figur 2.

Bei der Herstellung von Kabelverbindungen oder dgl. müssen die Enden der einzelnen Lichtwellenleiter nicht nur in einer gemeinsamen Ebene liegen, sondern die Enden müssen eine optisch ebene Fläche erhalten, welche senkrecht zur Längsachse der Lichtwellenleiter steht. Zur Fixierung der einzelnen Lichtwellenleiter dienen sog. Endstücke, die dann gleichzeitig auch Teil einer Spleißeinrichtung bilden.

In Figur 1 ist angenommen, daß die einzelnen Lichtwellenleiter 1 eines Mehrfachkabels 2 bereits außerhalb der Vorrichtung in einem sog. Endstück fixiert sind, welches mit Hilfe einer Klemmvorrichtung 3 gehalten wird. Hierbei kann das sog. Endstück auch einen wesentlichen Teil der Klemmvorrichtung 3 bilden. Die aus der Klemmvorrichtung 3 austretenden Enden der Lichtwellenleiter 1 liegen also genau positioniert und parallel nebeneinander, wobei zur Parallelführung der Lichtwellenleiter 1 die Klemmvorrichtung 3 mit dreieckigen Führungsnuten 3' ausgestattet sind. Die Enden der Lichtwellenleiter 1 sind über einen Amboß 4 geführt und in einer beweglichen Klemmvorrichtung 5 abermals festgeklemmt. Die Klemmvorrichtung 5 zur Festklemmung der Enden der Lichtwellenleiter 1 kann entsprechend der Klemmvorrichtung 3 ausgeführt sein. Die bewegliche Klemmvorrichtung 5 ist um eine Achse 6 schwenkbar und steht unter der Wirkung einer Feder 7, wie Figur 2 zeigt. Vorzugsweise ist die Feder 7 so ausgebildet, daß sie auch bei veränderbaren Schwenkwinkel eine konstante Spannung ausübt. Die Feder 7 ist an einem feststehenden Bauteil 8 und an einem Stift 9 der Klemmvorrichtung 5 festgelegt. Die Feder 9 versucht die Klemmvorrichtung 5 im Uhrzeigersinn gemäß Figur 2 zu verschwenken, d.h. die Enden der Lichtwellenleiter 1 zu spannen. Damit jedoch auf die Lichtwellenleiter 1 keine Zugspannung ausgeübt wird, ist eine Justierschraube 51 vorgesehen, die die Schwenkbewegung der Klemmvorrichtung 5 begrenzt. Mit 10 ist eine schwenkbare Klappe bezeichnet, die mit Hilfe einer Schraube 11 gegen die Enden der Lichtwellenleiter unter Zwischenschaltung einer elastischen Schicht gedrückt wird.

Der Amboß 4 weist eine zylindrische Oberfläche 13 auf, in der gleichlaufend mit dem Radius mehrere Rechtecknuten 20 für die Aufnahme der Lichtwellenleiter 1 eingearbeitet sind. Zu beiden Seiten vom Nutengrund ausgehend ist ein kleiner Radius angefräst, damit die Lichtwellenleiter 1 knickfrei auflaufen können.

Das Anheben der einzelnen Lichtwellenleiter erfolgt mit einem Spannhebel 14, der um eine Schwenkachse 15 schwenkbar ist und mit seinem freien Ende 16 entsprechend der Anzahl der Lichtwellenleiter 1 abgestuft ist, wobei jede Stufe 17 mit einem unmittelbar zugeordneten Lichtwellenleiter 1 zusammenwirkt. Das Anheben des Spannhebels 14 erfolgt mittelbar mittels eines Handhebels 33, der um einen Drehpunkt 18 schwenkbar ist. Die Bewegungsübertragung erfolgt mit Hilfe einer im Spannhebel 14 eingearbeiteten Führungsnut 38, in die ein an einem Schlitten 34 angebrachter Bolzen 39 zu gleiten vermag. Der Bolzen 39 erstreckt sich auch durch ein Langloch 37 des Handhebels 33. Zur Erzielung einer gleichförmigen Bewegung des Handhebels 33 ist mit der Welle 18 ein Bremszylinder 40 vorgesehen, wie Figur 4 zeigt.

Ein Anschlag 12 nahe der beweglichen Klemmvorrichtung 5 dient gleichzeitig dazu, die Klemmvorrichtung 5 zum Einlegen und Festklemmen der Lichtwellenleiter 1 in eine vorgegebene mittlere Ausgangsstellung zu bringen und in dieser zu arretieren. Zu diesem Zweck wirkt der Anschlag 12 mit einem an einer Stange 41 angeordneten Kopf 42 zusammen, dessen Durchmesser dem Durchmesser des Anschlages 12 entspricht und dessen Enden kegelstumpfförmig ausgebildet sind. Die Stange 41 ist in einem Lagerbock 43 geführt und steht unter der Wirkung einer Rückholfeder 44. Ferner ist die Stange 41 über einen Bolzen 45 mit dem Handhebel 33 verbunden. Wird der Handhebel 33 in Pfeilrichtung 46 gemäß Figur 4 verschwenkt, so wird nicht nur der Spannhebel 14 in die strichpunktierte Lage verstellt, sondern auch die Stange 41 nach links in bezug auf Figur 1 verstellt, wodurch der Kopf 42 den Anschlag 12 freigibt, so daß unter der Wirkung der Feder 7 eine Schwenkbewegung der Klemmvorrichtung 5 im Uhrzeigersinn gemäß Figur 2 ausgelöst wird, die durch die Justierschraube 51 so begrenzt wird, daß auf die Enden der Lichtwellenleiter 1 noch keine Zugspannung ausgeübt wird.

In Figur 5 ist eine Ritzvorrichtung 19 dargestellt, wobei von der Vorrichtung nach Figur 1 lediglich der Amboß 4 dargestellt ist, in dessen Rechtecknuten 20 die einzelnen Lichtwellenleiter parallel zueinander geführt sind. Die Ritzvorrichtung 19 ist auf dem Schlitten 34 angeordnet, der einen Lagerbock 24 für einen doppelarmigen Hebel 25 trägt. Das eine Ende 26 des doppelarmigen Hebels 25 trägt einen keilförmigen Diamanten 27, während das andere Ende des doppelarmigen Hebels mit einem Gegengewicht 28 versehen ist. Der doppelarmige Hebel 25 kann in Pfeilrichtung 29 um einen Drehpunkt 21 verschwenkt werden, wobei die Schwenkbewegung durch einen Abtaststift in Form einer Schraube 31 begrenzt ist, welche mit einer feststehenden Schablone 32 zusammenzuwirken in der Lage ist. Die Schablone 32 weist in der Zeichnung nicht dargestellte aneinandergereihte Zacken auf, der Anzahl und Abstand dem Abstand der Nuten 20 im Amboß 4 entspricht.

In dem Lagerbock 24 ist eine Stange 22 längsbeweglich geführt, die in der Ausgangsstellung gegen einen Anschlag 23 anstößt. Am vorderen Ende trägt die Stange 22 einen Kopf 30, der einerseits mit einem Anschlag 35 des doppelarmigen Hebels 25 und andererseits mit einem Anschlag 36 zusammenwirken kann. Der Schlitten 34 der Ritzvorrichtung 19 steht mit dem Handhebel 33 in Antriebsverbindung und zwar über den Bolzen 39 gemäß Figur 1.

Die Wirkungsweise der Vorrichtung ist wie folgt:
In der Ausgangsstellung befindet sich der Handhebel 33 in der in Figur 4 dargestellten Stellung I, in der der Spannhebel 14 sich in der abgesenkten Stellung befindet. Die mit dem Handhebel 33 in Antriebsverbindung stehende Stange 41 nimmt die in Figur 1 dargestellte Stellung ein, wobei der Kopf 42 in der entsprechenden Aussparung des Anschlages 12 festgehalten ist. Auf diese Weise ist die bewegliche Klemmvorrichtung 5 arretiert, so daß die Lichtwellenleiter 1 in den Klemmvorrichtungen 3 und 5 leicht und ohne Zug festgeklemmt werden können..

Nun wird der Hebel 33 mit gleichmäßiger Geschwindigkeit von seiner Ausgangsstellung I in die strichpunktierte Stellung II übergeführt. Hierbei wird vorerst die Stange 41 nach links bewegt, wobei der Kopf 42 die Arretierung der beweglichen Klemmvorrichtung 5 freigibt, so daß unter der Wirkung der Feder 7 die Klemmvorrichtung 5 im Uhrzeigersinn soweit verschwenkt wird, daß auf die Lichtwellenleiterenden 1 noch kein Zug ausgeübt wird, da die Justierschraube 51 diese Bewegung begrenzt. Mit fortschreitender Bewegung des Handhebels 33 wird nun der in der Reihenfolge erste Lichtwellenleiter so weit angehoben, daß die Kraft der Feder 7 ausschließlich auf den angehobenen Lichtwellenleiter wirkt. Das ist dann der Fall, wenn die Klemmvorrichtung 5 von dem Kopf der Justierschraube 51 abhebt. Sobald nun der erste Lichtwellenleiter soweit angehoben ist, daß die Zugspannung der Feder 7 allein wirksam ist, hat der Diamant 27 der mit dem Handhebel 33 gekoppelten Ritzvorrichtung 19 auch den entsprechend zugeordneten Lichtwellenleiter geritzt, und damit die Trennung herbeigeführt, so daß nun unter der Wirkung der Feder 7 die in bezug auf Figur 2 entgegen dem Uhrzeigersinn verschwenkte Klemmvorrichtung 5 in ihre Ausgangsstellung zurückschwenkt. Die Justierschraube 51 verhindert hierbei, daß durch die Masse der Klemmvorrichtung 5 die restlichen Lichtwellenleiter unzulässig beansprucht werden. Unmittelbar darauf oder etwas davor ist die nächste Stufe 17 mit dem nächstfolgenden Lichtwellenleiter in Wirkverbindung getreten und spannt diesen durch Anheben, wodurch die Kraft der Feder 7 allein auf diesen angehobenen Lichtwellenleiter wirkt. Unmittelbar darauffolgend wird auch dieser Lichtwellenleiter durch die Ritzvorrichtung 19 geritzt und damit getrennt. Dieser Vorgang wiederholt sich so lange, bis auch der letzte Lichtwellenleiter getrennt worden ist. Dies ist in der Stellung II des Handhebels 33 gemäß Figur 4.

Beim Rückschwenken des Handhebels 33 wird der doppelarmige Hebel 25 in hochgeschwenkter Lage in seine Ausgangsstellung gemäß Figur 5 zurückbewegt.

Am Ende der Drehbewegung des Handhebels 33 also bevor er die Stellung II erreicht, stößt der Kopf 30 gegen den Anschlag 36 , wodurch sich die Stange 22 nach rechts in bezug auf Figur 5 verschiebt und zwar soweit, daß über den Anschlag 35 der doppelarmige Hebel 25 mit dem Diamant 27 so weit angehoben wird,daß ein Verletzen der Fasertrennflächen beim Rückhub vermieden wird. Am Ende der Rückholbewegung stößt das andere Ende der Stange 22 gegen den Anschlag 23 , so daß der doppelarmige Hebel 25 in seine Ausgangsstellung gemäß Figur 5 zurückkehren kann.

Mit der erfindungsgemäßen Vorrichtung wird also auf jeden einzelnen Lichtwellenleiter eine ganz genau definierte Axialspannung aufgebracht, so daß sämtliche Lichtwellenleiter unter vollständig gleichen Bedingungen getrennt werden. Dies ergibt saubere und einwandfreie Trennflächen, die keiner speziellen Nacharbeitung mehr bedürfen. Durch die relativ einfache Mechanik ist gewährleistet, daß Aufnahme der Zugkraft durch eine optische Faser und Ritzen derselben gleichzeitig erfolgen. Durch den Handhebel, dessen Drehbewegung durch einen Drehdämpfer gleichmäßig abläuft, werden alle Bewegungen in zeitlicher Abhängigkeit voneinander gesteuert.

10 Patentansprüche
5 Figuren

Patentansprüche

1. Verfahren zum Trennen von mehreren in einem Kabel vereinigten Lichtwellenleitern, wobei die Lichtwellenleiter zumindest an der zu trennenden Stelle parallel über einen Amboß geführt werden, dann durch senkrechten Druck auf die einzelnen Lichtwellenleiter eine genau definierte Axialzugspannung in den Lichtwellenleitern eingestellt wird und anschließend die einzelnen Lichtwellenleiter auf dem Amboß in senkrechter Richtung geritzt werden, dadurch gekennzeichnet, daß zur Vorspannung der Lichtwellenleiter (1) eine definierte in Achsrichtung der Lichtwellenleiter (1) wirkende Kraft vorgesehen ist, die durch nacheinander erfolgendes Anheben des jeweilig zu ritzenden Lichtwellenleiters auf diesen übertragbar ist.

2. Vorrichtung zur Durchführung des Verfahrens nach Anspruch 1, bei der die Lichtwellenleiter an der Trennstelle mit Hilfe einer feststehenden und einer beweglichen Klemmvorrichtung parallel über einen Amboß vorspannbar sind, dadurch gekennzeichnet, daß die bewegliche Klemmvorrichtung (5) unter der Wirkung einer in Achsrichtung der Lichtwellenleiter (1) wirkenden definierten Kraft steht und daß das nacheinander erfolgende Anheben der Lichtwellenleiter (1) mit Hilfe eines am Ende entsprechend gestuften Spannhebels (14) erfolgt.

3. Vorrichtung nach Anspruch 2, dadurch gekennzeichnet, daß die auf die bewegliche Klemmvorrichtung (5) wirkende Kraft durch eine Feder (7) mit konstanter Spannung gebildet wird.

4. Vorrichtung nach Anspruch 2 oder 3, dadurch gekennzeichnet, daß die Schwenkbewegung der

BAD ORIGINAL

beweglichen Klemmvorrichtung (5) durch vorzugsweise verstellbare Anschläge begrenzt ist.

5. Vorrichtung nach Anspruch 4, dadurch gekennzeichnet, daß die Schwenkbewegung der beweglichen Klemmvorrichtung (5) in Zugrichtung der Feder (7) durch eine Justierschraube (51) begrenzt ist.

6. Vorrichtung nach einem der Ansprüche 2 bis 5, dadurch gekennzeichnet, daß die bewegliche Klemmvorrichtung (5) zum Einlegen bzw. Einspannen der Lichtwellenleiter (1) in eine definierte Ausgangsstellung gebracht wird und in dieser arretierbar ist.

7. Vorrichtung nach Anspruch 6, dadurch gekennzeichnet, daß zur Arretierung der beweglichen Klemmvorrichtung (5) eine mit einem konisch ausgebildeten Kopf (42) versehene Stange (41) vorgesehen ist, die mit einem Handhebel (33) zur Betätigung einer in senkrechter Richtung zu den Lichtwellenleitern (1) beweglichen Ritzvorrichtung (19) sowie mit dem Spannhebel (14) zum Anheben der Lichtwellenleiter (1) kraftschlüssig verbunden ist.

8. Vorrichtung nach Anspruch 7, dadurch gekennzeichnet, daß der zum Anheben der Lichtwellenleiter (1) vorgesehene Spannhebel (14) mit einer Führungsnut (38) versehen ist, in die ein am Schlitten (34) der Ritzvorrichtung (19) befestigter Bolzen (39) eingreift.

9. Vorrichtung nach Anspruch 7, dadurch gekennzeichnet, daß der am Schlitten (34) der Ritzvorrichtung (19) befestigte Bolzen (39) in ein Langloch (37) des Handhebels (33) eingreift.

10. Vorrichtung nach einem der Ansprüche 2 bis 9, dadurch g e k e n n z e i c h n e t , daß am Schlitten (34) der Ritzvorrichtung (19) eine Stange (22) längsbeweglich gelagert ist, die einen Kopf (30) aufweist, der mit dem doppelarmigen Hebel (25) der Ritzvorrichtung (19) derart zusammenwirkt, daß der Diamant (27) beim Rückholen der Ritzvorrichtung (19) in die Ausgangsstellung angehoben und in dieser wieder abgesenkt wird.

Bezugszeichenliste

1 Lichtwellenleiter
2 Mehrfachkabel
3 Klemmvorrichtung
3' Führungsnuten
4 Amboß
5 Klemmvorrichtung
6 Achse
7 Feder
8 Bauteil
9 Stift
10 Klappe
11 Schraube
12 Anschlag
13 Oberfläche
14 Spannhebel
15 Schwenkachse
16 Ende
17 Stufen
18 Drehpunkt (Welle)
19 Ritzvorrichtung
20 Rechtecknuten
21 Drehpunkt
22 Stange
23 Anschlag (22')
24 Lagerbock
25 doppelarmiger Hebel
26 Ende
27 Diamant
28 Gegengewicht
29 Pfeilrichtung
30 Kopf
31 Schraube
32 Schablone
33 Handhebel
34 Schlitten
35 Anschlag (25')
36 Anschlag (32')
37 Langloch (33')
38 Führungsnut
39 Bolzen
40 Bremszylinder
41 Stange
42 Kopf
43 Lagerbock
44 Rückholfeder
45 Bolzen
46 Pfeilrichtung
51 Justierschraube

FIG 1

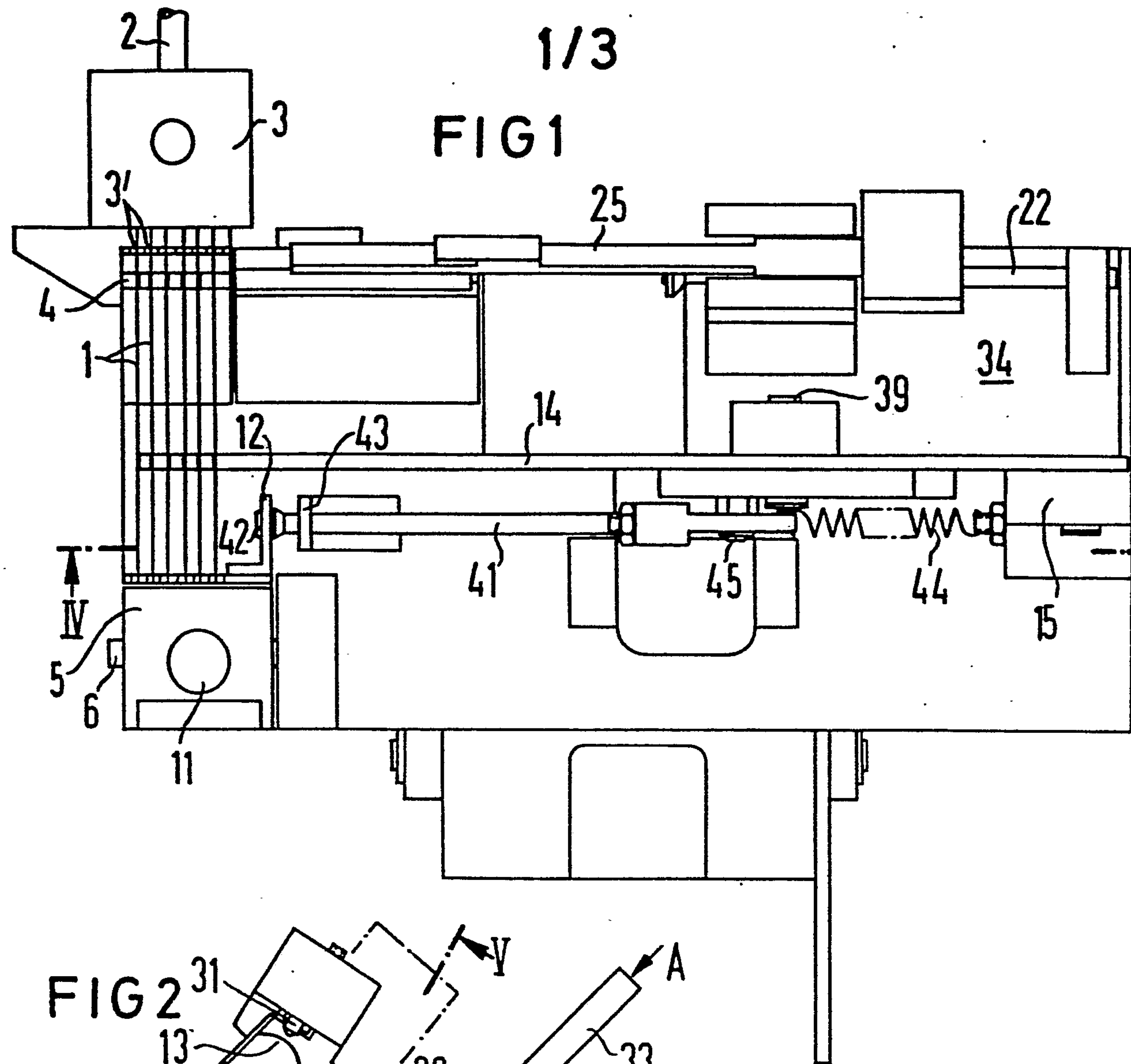
2
3
3'
4
1
25
22
34
39
14
12
43
42
41
45
44
15
IV
IV
5
6
11

FIG 2

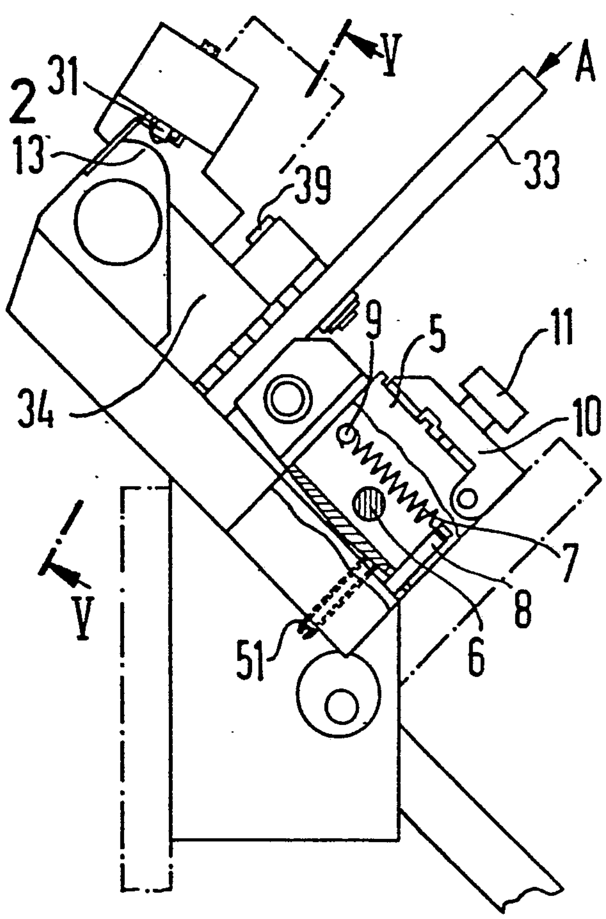
V
A
31
13
39
33
9
5
11
10
34
7
8
6
51
V

FIG 3

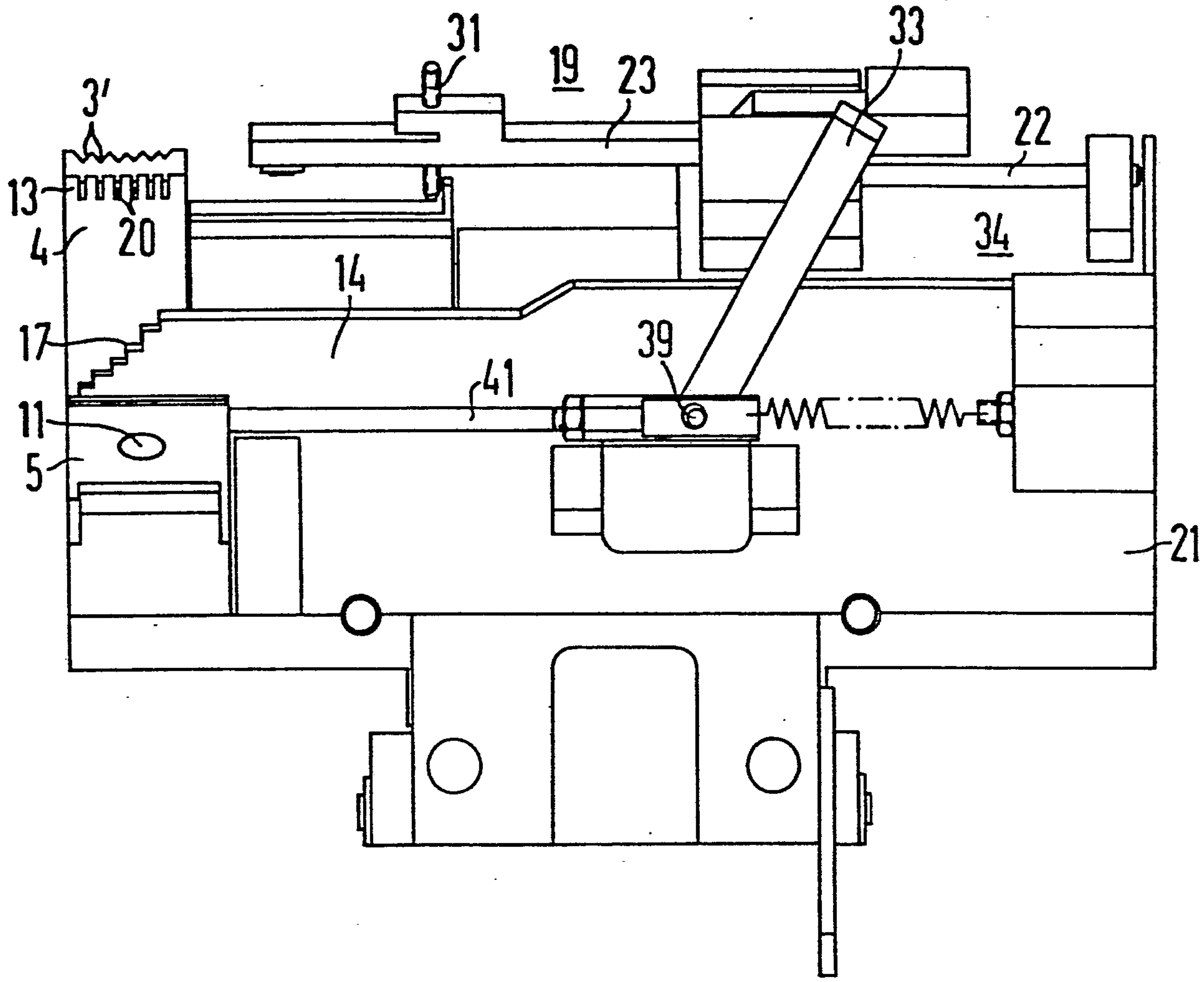

FIG 5

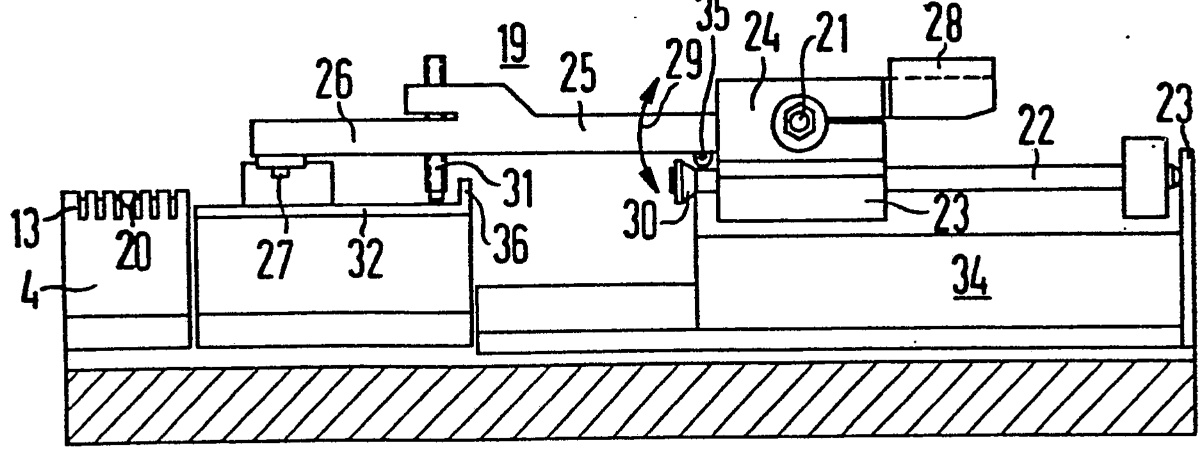
19
26
25
29
35
24
21
28
22
23
31
30
23
13
20
27
32
36
4
34

FIG 4

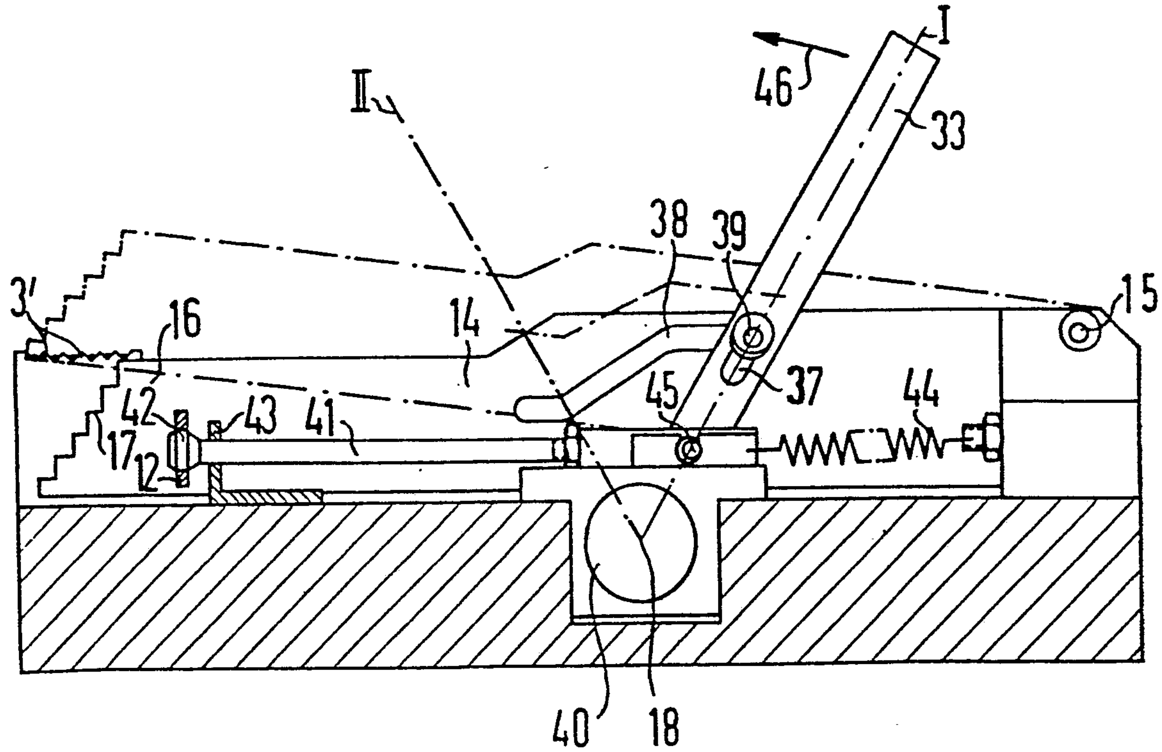
I
46
II
33
38
39
15
3'
16
14
37
45
44
42
43
41
17
12
40
18

Europäisches Patentamt

# EUROPÄISCHER RECHERCHENBERICHT

0039884
Nummer der Anmeldung
EP 81 10 3394

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 4 017 013 (HAWK)<br>* Insgesamt *<br>-- | 1,2 | C 03 B 37/16 |
| AD | DE - A - 2 925 070 (SIEMENS A.G.)<br>----- | | |

RECHERCHIERTE SACHGEBIETE (Int Cl.³)

C 03 B 37/16

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-07-1981 | VAN DEN BOSSCHE |

EPA form 1503.1 06.78